# EUROPÄISCHE PATENTSCHRIFT

(11) **EP 3 440 261 B1**
(45) Veröffentlichungstag und Bekanntmachung des Hinweises auf die Patenterteilung: **20.05.2020**
(21) Anmeldenummer: 17709583.3
(22) Anmeldetag: 08.03.2017
(51) Int. Cl.: E01B 27/00, B61D 15/00

(54) **VERFAHREN ZUM BE- UND ENTLADEN EINES GLEISVERFAHRBAREN TRANSPORTFAHRZEUGES**
METHOD FOR LOADING AND UNLOADING A RAIL-BORNE TRANSPORT VEHICLE
PROCÉDÉ POUR CHARGEMENT ET DÉCHARGEMENT D'UN VÉHICULE DE TRANSPORT CIRCULANT SUR VOIE

(30) Priorität: 05.04.2016 AT 1762016
(43) Veröffentlichungstag der Anmeldung: 13.02.2019
(73) Patentinhaber: Plasser & Theurer Export von Bahnbaumaschinen Gesellschaft m.b.H., 1010 Wien (AT)
(72) Erfinder: HÖTZENDORFER, Patrick, 4209 Engerwitzdorf (AT)
(86) Internationale Anmeldenummer: PCT/EP2017/000308
(87) Internationale Veröffentlichungsnummer: WO 2017/174171

(56) Entgegenhaltungen:
- EP-A1- 0 490 868
- EP-A1- 2 105 533
- EP-A2- 1 083 262
- EP-A2- 1 125 812
- WO-A1-2015/154844

## Beschreibung

Die Erfindung betrifft ein Verfahren zum Be- und Entladen eines gleisverfahrbaren Transportfahrzeuges.

Durch EP 1 083 262 ist ein derartiges gleisverfahrbares Transportfahrzeug mit einem Container für eine Schüttgutaufnahme sowie einem Fahrzeugrahmen bekannt. Ein erster Schüttguttransport wird auf einem in einer Fahrzeuglängsrichtung verlaufenden Bodenförderband und einem an dieses anschließenden, über ein Fahrzeugende vorkragenden Übergabeförderband durchgeführt. Parallel dazu ist auf einem vom Bodenförderband distanzierten dritten Förderband ein zweiter Schüttguttransport möglich. Dies hat den Vorteil, dass parallel zur Entleerung der Transportfahrzeuge auch deren Befüllung erfolgen kann.

Aus EP 1 125 812 A2 ist ein Schüttgutverladewagen bekannt, dessen Speicherkasten durch als Hydraulikzylinder ausgebildete Abstützorgane eine optimale Lastverteilung ermöglichen.

Die Aufgabe der vorliegenden Erfindung liegt nun in der Schaffung eines Verfahrens der eingangs genannten Art, mit dem eine Verbesserung des Schüttguttransportes möglich ist.

Diese Aufgabe wird erfindungsgemäß mit einem Verfahren der gattungsgemäßen Art dadurch gelöst, dass der Container mitsamt dem Bodenförderband und dem dritten Förderband um eine in Fahrzeuglängsrichtung verlaufende Achse relativ zum Fahrzeugrahmen verschwenkt wird, um für sämtliche Förderbänder unabhängig von einer Querneigung des Gleises eine - bezüglich einer Fahrzeugquerrichtung - horizontale Förderebene beizubehalten.

Mit einer derartigen Verschwenkung der gesamten Transporteinheit ist es möglich, auch in einem Gleisbogen trotz der Querneigung eine horizontale Transportebene der Förderbänder aufrechtzuerhalten. Damit kann eine nachteilige Konzentration der Schüttgutmassen in Richtung zur tiefer gelegenen Schiene sowohl im Container als auch auf dem dritten Förderband zuverlässig vermieden werden.

Weitere Vorteile der Erfindung ergeben sich aus der Zeichnungsbeschreibung.

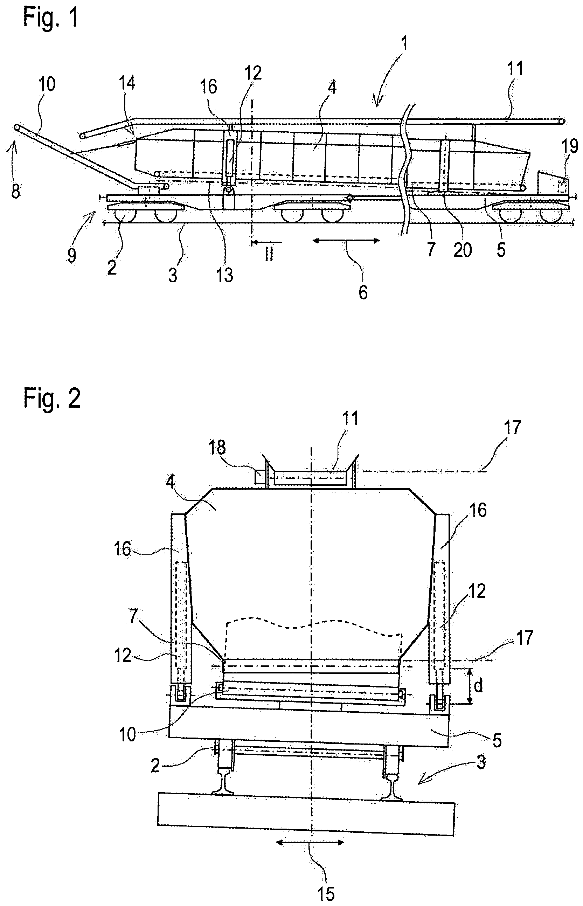

Im Folgenden wird die Erfindung anhand eines in der Zeichnung dargestellten Ausführungsbeispieles näher beschrieben. Es zeigen: Fig. 1 eine Seitenansicht eines zum Transport von Schüttgut vorgesehenen Transportfahrzeuges, und Fig. 2 einen vereinfachten Querschnitt durch das Transportfahrzeug gemäß der Schnittlinie II in Fig. 1.

Ein in Fig. 1 dargestelltes Transportfahrzeug 1 weist einen durch Schienenfahrwerke 2 auf einem Gleis 3 verfahrbaren, mit einem Container 4 zur Aufnahme von Schüttgut verbundenen Fahrzeugrahmen 5 auf. Im Container 4 ist anstelle einer Bodenfläche ein in einer Fahrzeuglängsrichtung 6 verlaufendes Bodenförderband 7 angeordnet. Diesem ist an einem - bezüglich der Transportrichtung - vorderen Ende 8 ein geneigt ausgebildetes und über ein Wagenende 9 vorkragendes Übergabeförderband 10 zugeordnet.

Außerdem ist ein vom Bodenförderband 7 distanziertes, in der Fahrzeuglängsrichtung 6 verlaufendes drittes Förderband 11 mit einem oberen Ende des Containers 4 verbunden. Damit auf dem Boden- und Übergabeförderband 7, 10 ein erster Schüttguttransport und parallel dazu auf dem dritten Förderband 11 ein unabhängiger zweiter Schüttguttransport durchführbar. Derartig ausgebildete Transportfahrzeuge 1 werden vielfach zur Bildung eines Transportzuges hintereinander angeordnet, wobei das Schüttgut über die zusammenhängenden Transportwege durchtransportierbar ist (s. EP 1 083262).

Wie insbesondere in Fig. 2 ersichtlich, ist der Container 4 mitsamt dem Bodenförderband 7 und dem dritten Förderband 11 durch zwei Schwenkantriebe 12 um eine in der Fahrzeuglängsrichtung 6 verlaufende Schwenkachse 13 relativ zum Fahrzeugrahmen 5 verschwenkbar. Dazu ist der Container 4 an einem an das Übergabeförderband 10 angrenzenden Längsende 14 durch zwei in einer Fahrzeugquerrichtung 15 voneinander distanzierte Containerstützen 16 mit dem Fahrzeugrahmen 5 verbunden. Jede Containerstütze 16 ist für eine Veränderung einer Distanz d zwischen Fahrzeugrahmen 5 und Container 4 durch die beiden Verschwenkantriebe 12 teleskopisch verlängerbar ausgebildet. Ein dem Längsende 14 gegenüberliegendes Ende des Containers 4 ist über eine Drehpfanne 20 gelenkig mit dem Fahrzeugrahmen 5 verbunden.

Da bekanntlich in einem Gleisbogen das Gleis 3 eine Gleisquerneigung aufweist, verlagert sich aufgrund der vertikalen Falllinie im Bereich der Schüttgutübergabe das Schüttgut in Richtung zur tiefer gelegenen Schiene. Dies führt zu einer Beeinträchtigung des Materialflusses. Um diesen negativen Effekt zu beheben, wird der Container 4 mitsamt dem Bodenförderband 7 und dem dritten Förderband 11 unter Beaufschlagung der beiden Verschwenkantriebe 12 um die Schwenkachse 13 relativ zum Fahrzeugrahmen 5 in Richtung zur höher gelegenen Schiene verschwenkt. Damit ist für die genannten Förderbänder 7, 11 - unabhängig von der Querneigung des Gleises 3 - eine bezüglich der Fahrzeugquerrichtung 15 horizontale Förderebene 17 gewährleistet.

Für eine automatische Verschwenkung des Containers 4 ist es von Vorteil, wenn eine Querneigungs-Messeinrichtung 8 sowie eine mit dieser verbundene Regelungs-/Steuereinrichtung 19 für eine Beaufschlagung der Verschwenkantriebe 12 und eine Verschwenkung des Containers 4 vorgesehen ist. Damit kann die horizontale Förderebene 17 unabhängig von der Gleisquerlage beibehalten werden.

## Patentansprüche

1. Verfahren zum Be- und Entladen eines gleisverfahrbaren, einen Container (4) für eine Schüttgutaufnahme sowie einen Fahrzeugrahmen (5) aufweisenden Transportfahrzeuges (1), wobei ein erster Schüttguttransport auf einem in einer Fahrzeuglängsrichtung verlaufenden Bodenförderband (7) und einem an dieses anschließenden, über ein Fahrzeugende (9) vorkragenden Übergabeförderband (10), und parallel dazu ein zweiter Schüttguttransport auf einem vom Bodenförderband (7) distanzierten dritten Förderband (11) durchgeführt wird, **dadurch gekennzeichnet, dass** der Container (4) mitsamt dem Bodenförderband (7) und dem dritten Förderband (11) um eine in Fahrzeuglängsrichtung (6) verlaufende Schwenkachse (13) relativ zum Fahrzeugrahmen (5) verschwenkt wird, um für diese Förderbänder (7, 11) unabhängig von einer Querneigung des Gleises (3) eine - bezüglich einer Fahrzeugquerrichtung (15) - horizontale Förderebene (17) beizubehalten.

## Claims

1. A method of loading and unloading a transport vehicle (1) mobile on a track, having a container (4) for receiving bulk material and a vehicle frame (5), wherein a first bulk material transport is carried out on a bottom conveyor belt (7), extending in a longitudinal direction of the vehicle, and on a transfer conveyor belt (10) adjoining the former and projecting beyond a vehicle end (9), and, parallel thereto, a second bulk material transport is carried out on a third conveyor belt (11) spaced from the bottom conveyor belt (7), **characterized in that** the container (4) together with the bottom conveyor belt (7) and the third conveyor belt (11) is pivoted relative to the vehicle frame (5) about a pivot axis (13) extending in the longitudinal direction (6) of the vehicle in order to maintain a horizontal conveying plane (17) - with regard to a transverse direction (15) of the vehicle - for these conveyor belts (7, 11) independently of a transverse inclination of the track (3).

## Revendications

1. Procédé de chargement et déchargement d'un véhicule de transport (1) pouvant être déplacé sur une voie ferrée, présentant un conteneur (4) pour une réception de marchandise en vrac ainsi qu'un châssis de véhicule (5), dans lequel un premier transport de marchandise en vrac est réalisé sur une courroie transporteuse au sol (7) s'étendant dans une direction longitudinale de véhicule et une courroie transporteuse de transfert (10) adjacente à celle-ci, saillant au-delà d'une extrémité de véhicule (9), et en parallèle à celui-ci, un second transport de marchandise en vrac est réalisé sur une troisième courroie transporteuse (11) écartée de la courroie transporteuse au sol (7), **caractérisé en ce que** le conteneur (4) avec la courroie transporteuse au sol (7) et la troisième courroie transporteuse (11) est pivoté autour d'un axe de pivotement (13) s'étendant dans la direction longitudinale de véhicule (6) par rapport au châssis de véhicule (5) pour conserver pour ces courroies transporteuses (7, 11) indépendamment d'une inclinaison transversale de la voie ferrée (3) un plan de transport horizontal (17) par rapport à une direction transversale de véhicule (15).
